# EUROPEAN PATENT SPECIFICATION

(11) **EP 3 285 027 B1**
(45) Date of publication and mention of the grant of the patent: **31.07.2019**
(21) Application number: 17176758.5
(22) Date of filing: 20.06.2017
(51) Int. Cl.: F25B 47/02, F25B 49/02, B64D 13/00

(54) **ADAPTIVELY CONTROLLED DEFROST CYCLE TIME FOR AN AIRCRAFT VAPOR CYCLE REFRIGERATION SYSTEM**
ADAPTIV GESTEUERTE ABTAUZYKLUSZEIT FÜR EIN FLUGZEUGDAMPFZYKLUSKÜHLSYSTEM
DURÉE DE CYCLE DE DÉGIVRAGE COMMANDÉE DE MANIÈRE ADAPTATIVE POUR UN SYSTÈME DE RÉFRIGÉRATION À CYCLE DE VAPEUR D'AÉRONEF

(30) Priority: 16.08.2016 US 201615238322
(43) Date of publication of application: 21.02.2018
(73) Proprietor: Hamilton Sundstrand Corporation, Charlotte, NC 28217 (US)
(72) Inventor: HO, Tony, Glastonbury, CT Connecticut 06033 (US); PARK, Young K., Simsbury, CT Connecticut 06070 (US); PATEL, Tejendra, Ellington, CT Connecticut 06029 (US)
(74) Representative: Dehns

(56) References cited:
- EP-A1- 2 545 331
- US-A1- 2007 144 187
- US-A1- 2014 137 580
- US-A1- 2015 204 589

## Description

### BACKGROUND

The present disclosure relates generally to vapor cycle refrigeration systems, and in particular to defrost operations associated with vapor cycle refrigeration systems.

Vapor cycle refrigeration systems, such as those implemented onboard aircraft, typically include an evaporator that converts a liquid refrigerant to a gas, thereby absorbing heat and providing cooling to an airflow. In some applications, the refrigerant employed by the evaporator operates at a temperature below the freezing point of water. As a result, the evaporator through which the refrigerant flows may cause water vapor in the air being cooled to condense and freeze at it passes through the evaporator. Ice buildup within the evaporator both reduces the cooling efficiency of the evaporator and restricts the flow of air through the evaporator.

To prevent the accumulation of ice and/or melt an existing ice buildup, periodic defrost operations of the vapor cycle refrigeration system are often initiated (e.g., on a periodic schedule). Typically, the defrost operations include stopping (or decreasing) the flow of refrigerant through the refrigeration system and allowing unconditioned air to flow through the evaporator to melt the ice. However, initiating the defrost operations too often or for too long can degrade the cooling performance of the system, as conditioned air is not provided by the system during the defrost operations. Similarly, initiating the defrost operations too infrequently or for too little time can also degrade system performance by inadequately removing (or preventing) the accumulation of ice and decreasing the cooling efficiency of the evaporator.

US 2015/0204589 relates to a vapor cycle refrigeration system performing a defrosting cycle, wherein the vapor cycle refrigeration system comprises an evaporator, a compressor, a pressure sensor disposed to sense pressure of the refrigerant at the inlet of the compressor and a controller device initiating a defrost cycle of the vapor cycle refrigeration system in response to the sensed pressure of the refrigerant being less than a threshold pressure.

### SUMMARY

According to the invention, a method includes (a) initiating a cooling cycle of a vapor cycle refrigeration system, (b) sensing a pressure of refrigerant at an inlet of a compressor of the vapor cycle refrigeration system during operation of the cooling cycle, and (c) initiating a defrost cycle of the vapor cycle refrigeration system in response to the sensed pressure being less than a threshold pressure. The method further includes (d) terminating the defrost cycle upon expiration of a defrost cycle time that is based upon a time duration of the cooling cycle, and (e) repeating steps (a) - (d).

According to the invention, a vapor cycle refrigeration system of an aircraft includes an evaporator, a compressor, a pressure sensor, and a controller device that includes at least one processor and computer-readable memory. The evaporator is configured to receive refrigerant and provide cooling to an airflow by evaporating the refrigerant. The compressor is configured to compress the refrigerant and produce flow of the refrigerant through the vapor cycle refrigeration system. The pressure sensor is disposed to sense pressure of the refrigerant at an inlet of the compressor. The controller device is operatively coupled to the pressure sensor and to the compressor. The computer-readable memory of the controller device is encoded with instructions that, when executed by the at least one processor, cause the controller device to (a) initiate a cooling cycle of the vapor cycle refrigeration system by increasing a speed of the compressor, (b) receive an indication of sensed pressure of the refrigerant at the inlet of the compressor from the pressure sensor, and (c) initiate a defrost cycle of the vapor cycle refrigeration system in response to the received indication of the sensed pressure of the refrigerant being less than a threshold pressure. The computer-readable memory is further encoded with instructions that, when executed by the at least one processor, cause the controller device to (d) terminate the defrost cycle upon expiration of a defrost cycle time that is based upon a time duration of the cooling cycle, and (e) repeat steps (a) - (d).

According to the invention, a controller device for a vapor cycle refrigeration system of an aircraft includes at least one processor and computer-readable memory. The computer-readable memory is encoded with instructions that, when executed by the at least one processor, cause the controller device to (a) initiate a cooling cycle of the vapor cycle refrigeration system, (b) receive an indication of a sensed pressure of refrigerant at an inlet of a compressor of the vapor cycle refrigeration system, and (c) initiate a defrost cycle of the vapor cycle refrigeration system in response to the indication of the sensed pressure being less than a threshold pressure. The computer-readable memory is further encoded with instructions that, when executed by the at least one processor, cause the controller device to (d) determine a time duration of the cooling cycle, (e) adjust a defrost cycle time based on the time duration of the cooling cycle to determine an adjusted defrost cycle time, (f) terminate the defrost cycle upon expiration of the adjusted defrost cycle time, and (g) repeat steps (a) - (f).

### BRIEF DESCRIPTION OF THE DRAWINGS

FIG. 1 is a schematic block diagram illustrating an example aircraft vapor cycle refrigeration system that adaptively controls a defrost cycle time based on a time duration of a cooling cycle.
FIGS. 2A and 2B are flow diagrams that together illustrate example operations to adaptively control a defrost cycle time based on a time duration of a cooling cycle of a vapor cycle refrigeration system.

### DETAILED DESCRIPTION

As described herein, a duration of a defrost cycle of a vapor cycle refrigeration system is adaptively controlled. A pressure of refrigerant at an inlet of a system compressor is sensed. Defrost operations of the vapor cycle refrigeration system are initiated in response to the sensed pressure being less than a threshold pressure. Accordingly, rather than require multiple sensors to measure, for example, temperature and/or differential pressure of refrigerant or airflow at an evaporator, a system implementing techniques of this disclosure can initiate defrost operations to prevent and/or mitigate ice buildup within the evaporator based on a single pressure sensor at an inlet of the compressor. The use of a single pressure sensor can significantly reduce cost and complexity while increasing reliability of the system. Moreover, a duration of the defrost cycle is iteratively adapted based on a time duration of a preceding cooling cycle and/or a number of consecutive successful and unsuccessful operating cycles. As such, the techniques described herein adaptively control (e.g., increase and decrease) the duration of the defrost cycle to account for varying environmental and system conditions, such as changing temperature and humidity of the operational environment, to better approximate an optimal defrost cycle time duration.

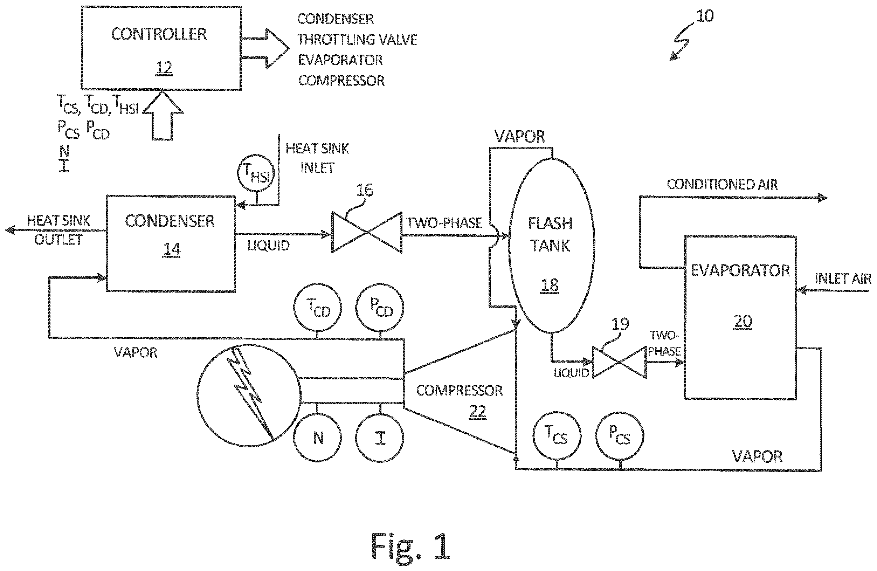

FIG. 1 is a schematic block diagram illustrating aircraft vapor cycle refrigeration system 10 including controller 12 that adaptively controls a defrost cycle time based on a time duration of a cooling cycle of vapor cycle refrigeration system 10. As illustrated in FIG. 1, vapor cycle refrigeration system 10 further includes condenser 14, expansion orifice 16, flash tank 18, throttling valve 19, evaporator 20, compressor 22, heat sink inlet temperature sensor T_{HSI}, compressor suction temperature sensor T_{CS}, compressor suction pressure sensor P_{CS}, compressor discharge temperature sensor T_{CD}, compressor discharge pressure sensor P_{CD}, compressor speed sensor N, and compressor motor current sensor I. The arrowed lines extending between condenser 14, expansion orifice 16, flash tank 18, throttling valve 19, evaporator 20, and compressor 22 indicate a flow and direction of refrigerant circulated in vapor cycle refrigeration system 12. Vapor cycle refrigeration system 10 can be part of, e.g., an air conditioning pack of a cooling system of an aircraft.

As illustrated in FIG. 1, refrigerant is supplied to compressor 22 in vapor form from both flash tank 18 and evaporator 20. Compressor 22 is driven by a compressor motor (not illustrated), a speed of which is controlled by controller 12 to compress the refrigerant to a higher pressure and supply the compressed refrigerant in vapor form to condenser 14. Operation of compressor 22 to compress the refrigerant drives a flow of refrigerant through vapor cycle refrigeration system 10. A greater operational speed of compressor 22 (e.g., a greater rotational speed of a shaft of compressor 22) increases the compression generated by compressor 22 and the corresponding flow of refrigerant. Similarly, a lesser operational speed of compressor 22 decreases the compression generated by compressor 22 and the corresponding flow of refrigerant.

Condenser 14 condenses the compressed vapor refrigerant received from compressor 22 to liquid form using cooling liquid and/or gaseous flow supplied through the heat sink inlet. Heat from the compressed refrigerant is transferred from the refrigerant to the cooling liquid and/or gaseous flow supplied to condenser 14 through the heat sink inlet and is carried away from vapor cycle refrigeration system 10 via the heat sink outlet. The condensed, liquid refrigerant is supplied from condenser 14 to expansion orifice 16. As the liquid refrigerant passes through expansion orifice 16, a rapid pressure reduction of the liquid refrigerant occurs causing an evaporation of a portion of the refrigerant and resulting in two-phase refrigerant (i.e., liquid phase and vapor phase) that is supplied to flash tank 18 where phase separation occurs through, e.g., gravity separation. Expansion orifice 16 can be a fixed orifice configured to cause the pressure reduction in the refrigerant. In some examples, expansion orifice 16 can be implemented as a valve, the position of which is controlled via, e.g., controller 12 to cause and/or control the pressure reduction of the refrigerant.

Vapor-form refrigerant is supplied from flash tank 18 to compressor 22. Liquid refrigerant, cooled by both the heat transfer in condenser 14 and the rapid pressure reduction in expansion orifice 16, is supplied to throttling valve 19. A position of throttling valve 19, sometimes referred to as an expansion valve, is controlled by a motor (not illustrated) via commands from controller 12 to cause an additional rapid pressure reduction of the liquid refrigerants as it passes through throttling valve 19, thereby causing an evaporation of a portion of the refrigerant (having a further cooling effect on the refrigerant) and resulting in a two-phase refrigerant (i.e., liquid phase and vapor phase) that is supplied to evaporator 20.

Evaporator 20 cools inlet air as it is passed through evaporator 20 through an evaporation process in which the liquid refrigerant is converted (i.e., evaporated) from the liquid state to a mostly or entirely gaseous state. The evaporation process absorbs heat from the inlet air, thereby cooling the inlet air and providing conditioned air for, e.g., a cabin, galley, or other air conditioning system. The evaporated refrigerant is supplied from evaporator 20 to compressor 22. As such, vapor cycle refrigeration system 10 provides a closed-loop cycle of refrigerant in which heat is transferred from an inlet air supply to the refrigerant to provide cooled, conditioned air, and rejected from vapor cycle refrigeration system 10 via the heat sink inlet and the heat sink outlet at condenser 14.

As inlet air passes through evaporator 20 and is cooled by the evaporation process of the refrigerant to provide the conditioned air, water vapor present in the inlet air can freeze, thereby causing ice to accumulate within evaporator 20. The accumulation of ice within evaporator 20 can degrade the cooling efficiency of evaporator 20 by hindering the transfer of heat from the inlet air to the refrigerant. This reduced heat transfer efficiency in evaporator 20 caused by the accumulation of ice can further reduce the refrigerant temperature. Due to the two-phase refrigerant heat transfer that occurs in evaporator 20 as refrigerant is evaporated by the transfer of heat from the inlet air, the pressure of the refrigerant within evaporator 20 is correlated with the refrigerant temperature within evaporator 20. That is, as the temperature of refrigerant within evaporator 20 decreases, the pressure of the refrigerant within evaporator 20 also decreases. Similarly, as the temperature of refrigerant within evaporator 20 increases, the pressure of the refrigerant within evaporator 20 also increases. Accordingly, controller 12 implementing techniques of this disclosure monitors a pressure of the refrigerant downstream of evaporator 20 via compressor suction pressure sensor P_{CS}. Controller 12 initiates a defrost cycle of vapor cycle refrigeration system 10 based on the measured refrigerant pressure from compressor suction pressure sensor P_{CS} and adaptively controls (e.g., adjusts) a time duration of the defrost cycle based on a time duration of a preceding cooling cycle, as is further described below.

Controller 12 can be any electronic device that is operationally coupled (e.g., electrically and/or communicatively coupled) to components of vapor cycle refrigeration system 10 to control real-time operation of the components of the system and to receive inputs from various sensors positioned throughout vapor cycle refrigeration system 10. As illustrated in FIG. 1, controller 12 is operationally connected to receive inputs from compressor suction temperature sensor T_{CS}, compressor discharge temperature sensor T_{CD}, heat sink inlet temperature sensor T_{HSI}, compressor suction pressure sensor P_{CS}, compressor discharge pressure sensor P_{CD}, compressor speed sensor N, and compressor motor current sensor I. In addition, controller 12 is operationally connected to control components of vapor cycle refrigeration system 10, such as condenser 14, throttling valve 19, evaporator 20, and compressor 22.

Controller 12 can include one or more processors and computer-readable memory encoded with instructions that, when executed by the one or more processors, cause controller 12 to operate in accordance with techniques described herein. Examples of the one or more processors include any one or more of a microprocessor, a controller, a digital signal processor (DSP), an application specific integrated circuit (ASIC), a field-programmable gate array (FPGA), or other equivalent discrete or integrated logic circuitry. Computer-readable memory of controller 12 can be configured to store information with controller 12 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of controller 12 can include volatile and non-volatile memories. Examples of volatile memories can include random access memories (RAM), dynamic random access memories (DRAM), static random access memories (SRAM), and other forms of volatile memories Examples of non-volatile memories can include magnetic hard discs, optical discs, floppy discs, flash memories, or forms of electrically programmable memories (EPROM) or electrically erasable and programmable (EEPROM) memories.

Compressor suction temperature sensor T_{CS} and compressor suction pressure sensor P_{CS} are positioned at or near an upstream inlet of compressor 22 to measure a temperature and pressure of refrigerant entering the upstream (or suction) inlet of compressor 22. Compressor discharge temperature sensor T_{CD} and compressor discharge pressure sensor P_{CD} are positioned at or near a downstream outlet of compressor 22 to measure a temperature and pressure of refrigerant exiting the downstream (or discharge) outlet of compressor 22. Compressor speed sensor N and compressor current sensor I are integral to or positioned adjacent to compressor 22. Compressor speed sensor N is configured to sense an operational speed of compressor 22, such as a rotational speed of a shaft of compressor 22. Compressor current sensor I is configured to sense an amount of electrical current draw of compressor 22 from a power source integral to or remote from vapor cycle refrigeration system 10. Heat sink inlet temperature sensor T_{HSI} is positioned at or near the heat sink inlet of condenser 14 to sense a temperature of the cooling liquid and/or gaseous flow through the heat sink inlet.

In operation, controller 12 initiates a cooling cycle of vapor cycle refrigeration system 10 by increasing an operational speed of compressor 22 to start the flow of refrigerant through vapor cycle refrigeration system 10. During the cooling cycle, refrigerant flowing through evaporator 20 absorbs heat from inlet air to provide cooled, conditioned air to a consuming system, such as an aircraft cabin, galley, or other cooling system. Controller 12 monitors the pressure sensed via compressor suction pressure sensor P_{CS} and initiates a defrost cycle in response to the sensed pressure being less than a threshold pressure, such as a defined minimum pressure stored in computer-readable memory of controller 12 that is less than normal operational refrigerant pressures of vapor cycle refrigeration system 10. A value of the threshold pressure can based on an operating state (or flight condition) of an aircraft that includes vapor cycle refrigeration system 10, such as an on-ground operating state, an in-flight operating state, or other operating states. Controller 12 decreases the operational speed of compressor 22 (or halts compressor 22) to decrease or stop the flow of refrigerant during the defrost cycle. Accordingly, during the defrost cycle, unconditioned inlet air passes through evaporator 20 and warms internal components of evaporator 20 to melt accumulated ice that could degrade the efficiency of heat transfer from the inlet air to refrigerant within evaporator 20. In addition, controller 12 adaptively controls the duration of the defrost cycle based on a time duration of a preceding cooling cycle. For instance, controller 12 can increase a duration of the defrost cycle in response to determining that the time duration of a preceding cooling cycle is less than a threshold time duration, such as a desired minimum continuous runtime of vapor cycle refrigeration system 10 in a cooling cycle without entering a defrost cycle (e.g., ten minutes, fifteen minutes, thirty minutes, one hour, or other minimum continuous cooling cycle runtimes). Controller 12 can decrease the duration of the defrost cycle in response to determining that the time duration of the preceding cooling cycle is greater than the threshold time duration. The defrost cycle time can, in certain examples, be based on an operating state (or flight condition) of an aircraft that includes vapor cycle refrigeration system 10, such as an on-ground operating state, an in-flight operating state, or other operating states. In some examples, controller 12 can compare the duration of the defrost cycle to a maximum defrost cycle time duration to differentiate between an inadequate defrost cycle duration and, e.g., a system fault condition. For instance, if the desired minimum continuous cooling cycle runtime is not achieved when the defrost cycle time is greater than or equal to the maximum defrost cycle time duration, controller 12 can identify a fault condition of vapor cycle refrigeration system 10 due to, e.g., low refrigerant charge, a fault condition of throttling valve 19, or other fault conditions. Controller 12 can output an indication identifying that the fault condition is present for, e.g., annunciation at a display device or other consuming system.

As such, controller 12 controls a time duration of defrost operations to adapt to changing environmental and system conditions, such as temperature and/or moisture content of the inlet air. The adaptive control can help to ensure that a duration of the defrost cycle is sufficient to prevent accumulation of ice within evaporator 20 that could prevent continuous runtime in a cooling cycle that is less than a prescribed minimum time duration while preventing excessive defrosting that could degrade the overall cooling performance of vapor cycle refrigeration system 10.

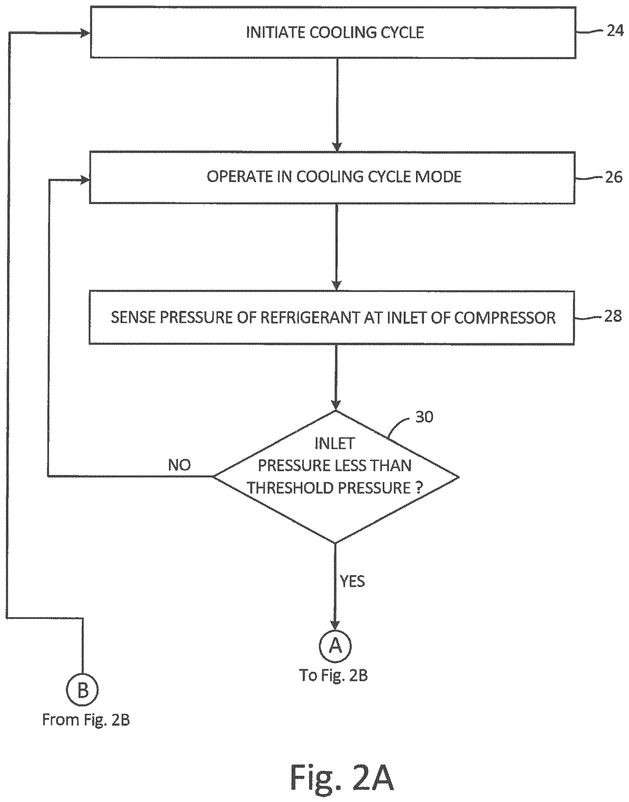

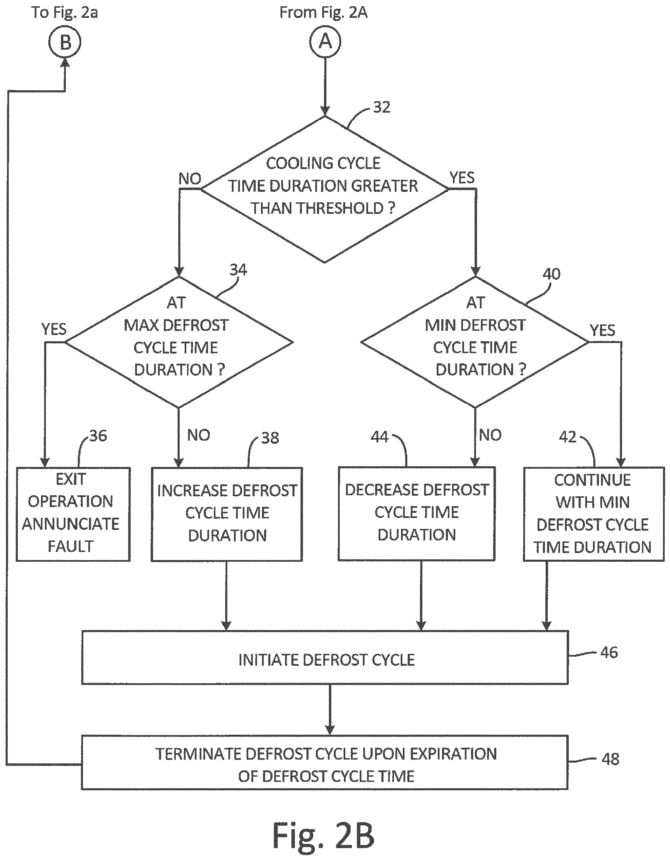

FIGS. 2A and 2B are flow diagrams illustrating example operations to adaptively control a defrost cycle time based on a time duration of a cooling cycle of a vapor cycle refrigeration system. For purposes of clarity and ease of discussion, the example operations of FIGS. 2A and 2B are described together within the context of vapor cycle refrigeration system 10 of FIG. 1.

A cooling cycle of vapor cycle refrigeration system 10 is initiated (Step 24). For example, controller 12 can command operation of compressor 22 to start a flow of refrigerant through vapor cycle refrigeration system 10. Vapor cycle refrigeration system 10 operates in a cooling cycle mode (Step 26). During the cooling cycle mode, operation of compressor 22 causes refrigerant to flow through evaporator 20 where heat from inlet air is absorbed by the refrigerant, thereby producing a cooled, conditioned airflow for one or more consuming systems.

Pressure of the refrigerant is sensed at an inlet of compressor 22 during operation of the cooling cycle (Step 28). For example, compressor suction pressure sensor P_{CS} senses pressure of refrigerant downstream of evaporator 20 at or near an inlet of compressor 22 and transmits the sensed pressure to controller 12 via one or more electrical and/or communicative connections. Controller 12 determines whether the sensed pressure at the inlet of compressor 22 is less than a threshold pressure (Step 30). For example, controller 12 can store a predetermined minimum pressure threshold that is less than normal operational pressures of refrigerant within vapor cycle refrigeration system 10. The threshold pressure can, in certain examples, be based on an operating state (or flight condition) of an aircraft that includes vapor cycle refrigeration system 10, such as an on-ground operating state, an in-flight operating state, or other operating states. A pressure of refrigerant sensed by compressor suction pressure sensor P_{CS} that is less than the threshold pressure can correspond to a temperature of refrigerant within evaporator 20 that is indicative of the accumulation of ice within evaporator 20. In response to determining that the sensed pressure at the inlet of compressor 22 is not less than the threshold pressure ("NO" branch of Step 30), controller 12 continues to cause vapor cycle refrigeration system 10 to operate in the cooling cycle mode (Step 26).

In response to determining that the sensed pressure at the inlet of compressor 22 is less than the threshold pressure ("YES" branch of Step 30), controller 12 determines whether the duration of the cooling cycle of vapor cycle refrigeration system 10 is greater than a threshold time duration (Step 32). For example, controller 12 can store a threshold time duration corresponding to a desired minimum continuous runtime of vapor cycle refrigeration system 10 in a cooling cycle without entering a defrost cycle (e.g., fifteen minutes or other threshold durations of time). The threshold time duration can, in some examples, be based on an operating state (or flight condition) of an aircraft that includes vapor cycle refrigeration system 10, such as an on-ground operating state, an in-flight operating state, or other operating states. Controller 12 can measure a duration of the preceding cooling cycle, such as by determining a difference between a time when the immediately-preceding cooling cycle was initiated (e.g., at Step 24) and a time when the sensed pressure at the inlet of compressor 22 was determined to be below the threshold pressure (e.g., at the "YES" branch of Step 30).

In response to determining that the duration of the cooling cycle of vapor cycle refrigeration system 10 is not greater than the threshold time duration ("NO" branch of Step 32), controller 12 determines whether the time duration of the defrost cycle is greater than (or equal to) a maximum defrost cycle time duration stored at, e.g., computer-readable memory of controller 12 (Step 34). In response to determining that the time duration of the defrost cycle is greater than (or equal to) the maximum defrost cycle time duration ("YES" branch of Step 34), controller 12 exits operation of the cooling and defrost cycles of vapor cycle refrigeration system 10 (e.g., shuts down vapor cycle refrigeration system 10 by decreasing an operational speed of or stopping operation of compressor 22) and outputs an indication of a fault condition of vapor cycle refrigeration system 10 (Step 36). That is, a defrost cycle time duration that is greater than the maximum defrost cycle time duration can indicate a fault condition of vapor cycle refrigeration system due to, e.g., low refrigerant charge, a fault condition of throttling valve 19, or other fault conditions. As such, controller 12 can identify and output an indication of the presence of a fault condition of vapor cycle refrigeration system 10 based at least in part on the time duration of a preceding cooling cycle.

In response to determining that the defrost cycle time duration is not greater than (or equal to) the maximum defrost cycle time duration ("NO" branch of Step 34), controller 12 increases the time duration of the defrost cycle (Step 38). For example, controller 12 can store (e.g., in computer-readable memory) an initial baseline defrost cycle time duration, such as three minutes, five minutes, or other time durations. Controller 12 can increase the defrost cycle time duration from the baseline duration, such as by an amount of thirty seconds, one minute, or other increased time durations to arrive at an adjusted defrost cycle time duration. Controller 12 can increase the defrost cycle time duration from the baseline duration during, e.g., a first iteration of the operations of FIGS. 2A and 2B, and can increase the defrost cycle time duration from the adjusted defrost cycle time duration during subsequent iterations of the operations of FIGS. 2A and 2B. In some examples, controller 12 can increase the defrost cycle time by an amount that is proportional to a difference between the threshold time duration and the time duration of the preceding cooling cycle.

In response to determining that the duration of the cooling cycle of vapor cycle refrigeration system 10 is greater than the threshold time duration ("YES" branch of Step 32), controller 12 determines whether the defrost cycle time duration is less than (or equal to) a minimum defrost cycle time duration stored at, e.g., computer-readable memory of controller 12 (Step 40). In response to determining that the defrost cycle time duration is less than (or equal to) the minimum defrost cycle time duration ("YES" branch of step 40), controller 12 continues to operate the defrost cycle using the minimum defrost cycle time duration by, e.g., setting the defrost cycle time duration as the minimum defrost cycle time duration (Step 42).

In response to determining that the defrost cycle time duration is not less than (or equal to) the minimum defrost cycle time duration ("NO" branch of Step 40), controller 12 decreases the time duration of the defrost cycle (Step 44) to arrive at an adjusted defrost cycle time. Controller 12 can decrease the defrost cycle time from a baseline defrost cycle time duration during, e.g., a first iteration of the operations of FIGS. 2A and 2B. Controller 12 can decrease the defrost cycle time from the adjusted defrost cycle time during, e.g., subsequent iterations of the operations of FIGS. 2A and 2B. In some examples, controller 12 can decrease the defrost cycle time by an amount that is proportional to a difference between the threshold time duration and the time duration of the preceding cooling cycle.

Accordingly, controller 12 can adjust the defrost cycle time by increasing (in Step 38) or decreasing (in Step 44) the defrost cycle time based on the time duration of the cooling cycle. Controller 12 initiates the defrost cycle of vapor cycle refrigeration system 10 (Step 46). Controller 12 terminates the defrost cycle (Step 48) upon expiration of the determined defrost cycle time (i.e., the adjusted defrost cycle time determined in one of Step 38 and Step 44). Controller 12 can initiate the defrost cycle by decreasing an operational speed of compressor 22 (or halting compressor 22) to slow or stop a flow of refrigerant through vapor cycle refrigeration system 10, thereby enabling unconditioned inlet air to flow through evaporator 20 to warm internal components of evaporator 20 and mitigate the accumulation of ice within evaporator 20. Controller 12 can terminate the defrost cycle by, e.g., increasing the operational speed of compressor 22 to increase or start the flow of refrigerant through vapor cycle refrigeration system 10 and initiate a subsequent cooling cycle (Step 24).

Accordingly, vapor cycle refrigeration system 10 implementing techniques of this disclosure can adaptively control the duration of a defrost cycle, thereby accounting for varying environmental and system conditions and increasing overall cooling efficiency of the system. Moreover, the techniques can enable such adaptive control based on a single pressure sensor P_{CS} disposed downstream of evaporator 20 at an inlet of compressor 22, thereby decreasing the cost, weight, and complexity of implementation of the adaptive control techniques.

### Discussion of Possible Embodiments

The following are non-exclusive descriptions of possible embodiments of the present invention.

A method includes (a) initiating a cooling cycle of a vapor cycle refrigeration system, (b) sensing a pressure of refrigerant at an inlet of a compressor of the vapor cycle refrigeration system during operation of the cooling cycle, and (c) initiating a defrost cycle of the vapor cycle refrigeration system in response to the sensed pressure being less than a threshold pressure. The method further includes (d) terminating the defrost cycle upon expiration of a defrost cycle time that is based upon a time duration of the cooling cycle, and (e) repeating steps (a) - (d).

The method of the preceding paragraph can optionally include, additionally and/or alternatively, any one or more of the following features, configurations, operations and/or additional components:

The method can further include adjusting the defrost cycle time based on the time duration of the cooling cycle.

Adjusting the defrost cycle time based on the time duration of the cooling cycle can include increasing the defrost cycle time in response to determining that the time duration of the cooling cycle is less than a threshold time duration.

Adjusting the defrost cycle time based on the time duration of the cooling cycle can include decreasing the defrost cycle time in response to determining that the time duration of the cooling cycle is greater than a threshold time duration.

Adjusting the defrost cycle time based on the time duration of the cooling cycle can include adjusting the time duration of the cooling cycle by an amount that is proportional to a difference between a threshold time duration and the time duration of the cooling cycle.

Adjusting the defrost cycle time can include adjusting the defrost cycle time from a baseline defrost cycle time based on a difference between the time duration of the cooling cycle and a threshold time duration.

Initiating the defrost cycle can include reducing an operational speed of the compressor of the vapor cycle refrigeration system, and wherein initiating the cooling cycle can include increasing the operational speed of the compressor.

A vapor cycle refrigeration system of an aircraft includes an evaporator, a compressor, a pressure sensor, and a controller device that includes at least one processor and computer-readable memory. The evaporator is configured to receive refrigerant and provide cooling to an airflow by evaporating the refrigerant. The compressor is configured to compress the refrigerant and produce flow of the refrigerant through the vapor cycle refrigeration system. The pressure sensor is disposed to sense pressure of the refrigerant at an inlet of the compressor. The controller device is operatively coupled to the pressure sensor and to the compressor. The computer-readable memory of the controller device is encoded with instructions that, when executed by the at least one processor, cause the controller device to (a) initiate a cooling cycle of the vapor cycle refrigeration system by increasing a speed of the compressor, (b) receive an indication of sensed pressure of the refrigerant at the inlet of the compressor from the pressure sensor, and (c) initiate a defrost cycle of the vapor cycle refrigeration system in response to the received indication of the sensed pressure of the refrigerant being less than a threshold pressure. The computer-readable memory is further encoded with instructions that, when executed by the at least one processor, cause the controller device to (d) terminate the defrost cycle upon expiration of a defrost cycle time that is based upon a time duration of the cooling cycle, and (e) repeat steps (a) - (d).

The vapor cycle refrigeration system of the preceding paragraph can optionally include, additionally and/or alternatively, any one or more of the following features, configurations, operations and/or additional components:

The computer-readable memory of the controller device can be further encoded with instructions that, when executed by the at least one processor, cause the controller device to adjust the defrost cycle time based on the time duration of the cooling cycle.

The computer-readable memory of the controller device can be further encoded with instructions that, when executed by the at least one processor, cause the controller device to adjust the defrost cycle time based on the time duration of the cooling cycle by increasing the defrost cycle time in response to determining that the time duration of the cooling cycle is less than a threshold time duration.

The computer-readable memory of the controller device can be further encoded with instructions that, when executed by the at least one processor, cause the controller device to adjust the defrost cycle time based on the time duration of the cooling cycle by decreasing the defrost cycle time in response to determining that the time duration of the cooling cycle is greater than a threshold time duration.

The computer-readable memory of the controller device can be further encoded with instructions that, when executed by the at least one processor, cause the controller device to adjust the defrost cycle time by an amount that is proportional to a difference between a threshold time duration and the time duration of the cooling cycle.

The computer-readable memory of the controller device can be further encoded with instructions that, when executed by the at least one processor, cause the controller device to adjust the defrost cycle time from a baseline defrost cycle time based on a difference between the time duration of the cooling cycle and a threshold time duration.

The computer-readable memory of the controller device can be further encoded with instructions that, when executed by the at least one processor, cause the controller device to initiate the defrost cycle by reducing an operational speed of the compressor, and wherein the computer-readable memory of the controller device can be further encoded with instructions that, when executed by the at least one processor, cause the controller device to initiate the cooling cycle by increasing the operational speed of the compressor.

A controller device for a vapor cycle refrigeration system of an aircraft includes at least one processor and computer-readable memory. The computer-readable memory is encoded with instructions that, when executed by the at least one processor, cause the controller device to (a) initiate a cooling cycle of the vapor cycle refrigeration system, (b) receive an indication of a sensed pressure of refrigerant at an inlet of a compressor of the vapor cycle refrigeration system, and (c) initiate a defrost cycle of the vapor cycle refrigeration system in response to the indication of the sensed pressure being less than a threshold pressure. The computer-readable memory is further encoded with instructions that, when executed by the at least one processor, cause the controller device to (d) determine a time duration of the cooling cycle, (e) adjust a defrost cycle time based on the time duration of the cooling cycle to determine an adjusted defrost cycle time, (f) terminate the defrost cycle upon expiration of the adjusted defrost cycle time, and (g) repeat steps (a) - (f).

The controller device of the preceding paragraph can optionally include, additionally and/or alternatively, any one or more of the following features, configurations, operations and/or additional components:

The computer-readable memory can be further encoded with instructions that, when executed by the at least one processor, cause the controller device to: determine that the time duration of the cooling cycle is less than a threshold time duration; and increase the defrost cycle time by increasing the defrost cycle time in response to determining that the time duration of the cooling cycle is less than the threshold time duration.

The computer-readable memory can be further encoded with instructions that, when executed by the at least one processor, cause the controller device to: determine that the time duration of the cooling cycle is greater than a threshold time duration; and decrease the defrost cycle time by increasing the defrost cycle time in response to determining that the time duration of the cooling cycle is greater than the threshold time duration.

The computer-readable memory can be further encoded with instructions that, when executed by the at least one processor, cause the controller device to: determine a difference between the time duration of the cooling cycle and a threshold time duration; and adjust the defrost cycle time by an amount that is proportional to the determined difference between the time duration of the cooling cycle and the threshold time duration.

The computer-readable memory can be further encoded with instructions that, when executed by the at least one processor, cause the controller device to: determine a difference between the time duration of the cooling cycle and a threshold time duration; and adjust the defrost cycle time from a baseline defrost cycle time based on a the determined difference between the time duration of the cooling cycle and the threshold time duration.

The computer-readable memory can be further encoded with instructions that, when executed by the at least one processor, cause the controller device to: initiate the defrost cycle by reducing an operational speed of the compressor of the vapor cycle refrigeration system; and initiate the cooling cycle by increasing the operational speed of the compressor.

## Claims

1. A method comprising:
(a) initiating a cooling cycle of a vapor cycle refrigeration system (10) of an aircraft;
(b) sensing a pressure of refrigerant at an inlet of a compressor of the vapor cycle refrigeration system during operation of the cooling cycle;
(c) initiating a defrost cycle of the vapor cycle refrigeration system (10) in response to the sensed pressure being less than a threshold pressure;
(d) terminating the defrost cycle upon expiration of a defrost cycle time that is based upon a time duration of the cooling cycle; and
(e) repeating steps (a) - (d).

2. The method of claim 1, further comprising:
adjusting the defrost cycle time based on the time duration of the cooling cycle.

3. The method of claim 2,
wherein adjusting the defrost cycle time based on the time duration of the cooling cycle comprises increasing the defrost cycle time in response to determining that the time duration of the cooling cycle is less than a threshold time duration.

4. The method of claim 2,
wherein adjusting the defrost cycle time based on the time duration of the cooling cycle comprises decreasing the defrost cycle time in response to determining that the time duration of the cooling cycle is greater than a threshold time duration.

5. The method of claim 2,
wherein adjusting the defrost cycle time based on the time duration of the cooling cycle comprises adjusting the time duration of the cooling cycle by an amount that is proportional to a difference between a threshold time duration and the time duration of the cooling cycle.

6. The method of claim 2,
wherein adjusting the defrost cycle time comprises adjusting the defrost cycle time from a baseline defrost cycle time based on a difference between the time duration of the cooling cycle and a threshold time duration.

7. The method of claim 1,
wherein initiating the defrost cycle comprises reducing an operational speed of the compressor of the vapor cycle refrigeration system; and
wherein initiating the cooling cycle comprises increasing the operational speed of the compressor.

8. A vapor cycle refrigeration system (10) of an aircraft, the vapor cycle refrigeration system comprising:
an evaporator (20) configured to receive refrigerant and provide cooling to an airflow by evaporating the refrigerant;
a compressor (22) configured to compress the refrigerant and produce flow of the refrigerant through the vapor cycle refrigeration system;
a pressure sensor disposed to sense pressure of the refrigerant at the inlet of the compressor (22); and
a controller device (12) operatively coupled to the pressure sensor and to the compressor (22), the controller device comprising:
at least one processor; and
computer-readable memory encoded with instructions that, when executed by the at least one processor, cause the controller device to:
(a) initiate a cooling cycle of the vapor cycle refrigeration system by increasing a speed of the compressor;
(b) receive an indication of sensed pressure of the refrigerant at the inlet of the compressor from the pressure sensor;
(c) initiate a defrost cycle of the vapor cycle refrigeration system in response to the received indication of the sensed pressure of the refrigerant being less than a threshold pressure;
(d) terminate the defrost cycle upon expiration of a defrost cycle time that is based upon a time duration of the cooling cycle; and
(e) repeat steps (a) - (d).

9. The vapor cycle refrigeration system (10) of claim 8,
wherein the computer-readable memory of the controller device is further encoded with instructions that, when executed by the at least one processor, cause the controller device to adjust the defrost cycle time based on the time duration of the cooling cycle.

10. The vapor cycle refrigeration system (10) of claim 9,
wherein the computer-readable memory of the controller device is further encoded with instructions that, when executed by the at least one processor, cause the controller device to adjust the defrost cycle time based on the time duration of the cooling cycle by increasing the defrost cycle time in response to determining that the time duration of the cooling cycle is less than a threshold time duration.

11. The vapor cycle refrigeration system (10) of claim 9,
wherein the computer-readable memory of the controller device is further encoded with instructions that, when executed by the at least one processor, cause the controller device to adjust the defrost cycle time based on the time duration of the cooling cycle by decreasing the defrost cycle time in response to determining that the time duration of the cooling cycle is greater than a threshold time duration.

12. The vapor cycle refrigeration system (10) of claim 9,
wherein the computer-readable memory of the controller device is further encoded with instructions that, when executed by the at least one processor, cause the controller device to adjust the defrost cycle time by an amount that is proportional to a difference between a threshold time duration and the time duration of the cooling cycle.

13. The vapor cycle refrigeration system (10) of claim 9,
wherein the computer-readable memory of the controller device is further encoded with instructions that, when executed by the at least one processor, cause the controller device to adjust the defrost cycle time from a baseline defrost cycle time based on a difference between the time duration of the cooling cycle and a threshold time duration.

14. The vapor cycle refrigeration system (10) of claim 8,
wherein the computer-readable memory of the controller device is further encoded with instructions that, when executed by the at least one processor, cause the controller device to initiate the defrost cycle by reducing an operational speed of the compressor; and
wherein the computer-readable memory of the controller device is further encoded with instructions that, when executed by the at least one processor, cause the controller device to initiate the cooling cycle by increasing the operational speed of the compressor.

## Patentansprüche

1. Verfahren, das Folgendes umfasst:
(a) Einleiten eines Kühlzyklus eines Dampfzykluskühlsystems (10) eines Flugzeugs;
(b) Erfassen eines Drucks von Kältemittel an einem Einlass eines Verdichters des Dampfzykluskühlsystems während Betriebs des Kühlzyklus;
(c) Einleiten eines Abtauzyklus des Dampfzykluskühlsystems (10) als Reaktion darauf, dass der Druck geringer ist als ein Schwellenwertdruck;
(d) Bestimmen des Abtauzyklus bei Ablaufen der Abtauzykluszeit, die auf einer Zeitdauer des Kühlzyklus beruht; und
(e) Wiederholen der Schritte (a) - (d)

2. Verfahren nach Anspruch 1, das ferner Folgendes umfasst:
Einstellen der Abtauzykluszeit auf Grundlage der Zeitdauer des Kühlzyklus.

3. Verfahren nach Anspruch 2,
wobei Einstellen der Abtauzykluszeit auf Grundlage der Zeitdauer des Kühlzyklus Erhöhen der Abtauzykluszeit als Reaktion auf Bestimmen, dass die Zeitdauer des Kühlzyklus weniger ist als eine Schwellenwertzeitdauer, umfasst.

4. Verfahren nach Anspruch 2,
wobei Einstellen der Abtauzykluszeit auf Grundlage der Zeitdauer des Kühlzyklus Verringern der Abtauzykluszeit als Reaktion auf Bestimmen, dass die Zeitdauer des Kühlzyklus größer ist als eine Schwellenwertzeitdauer, umfasst.

5. Verfahren nach Anspruch 2,
wobei Einstellen der Abtauzykluszeit auf Grundlage einer Zeitdauer des Kühlzyklus Einstellen der Zeitdauer des Kühlzyklus um eine Menge umfasst, die proportional zu einer Differenz zwischen einer Schwellenwertzeitdauer und der Zeitdauer des Kühlzyklus ist.

6. Verfahren nach Anspruch 2,
wobei Einstellen der Abtauzykluszeit Einstellen der Abtauzykluszeit von einer Basisabtauzykluszeit auf Grundlage einer Differenz zwischen der Zeitdauer des Kühlzyklus und einer Schwellenwertzeitdauer umfasst.

7. Verfahren nach Anspruch 1,
wobei Einleiten des Abtauzyklus Reduzieren einer Betriebsdrehzahl des Verdichters des Dampfzykluskühlsystems umfasst; und
wobei Einleiten des Kühlzyklus Erhöhen der Betriebsdrehzahl des Verdichters umfasst.

8. Dampfzykluskühlsystem (10) eines Flugzeugs, wobei das Dampfzykluskühlsystem Folgendes umfasst:
einen Verdampfer (20), der dazu konfiguriert ist, ein Kältemittel aufzunehmen und Kühlung durch Verdampfen des Kältemittels an einen Luftstrom bereitzustellen;
einen Verdichter (22), der dazu konfiguriert ist, das Kältemittel zu verdichten und einen Strom des Kältemittels durch das Dampfzykluskühlsystem zu produzieren;
einen Drucksensor, der dazu angeordnet ist, Druck des Kältemittels an dem Einlass des Verdichters (22) zu erfassen; und
eine Steuerungsvorrichtung (12), die an den Drucksensor und den Verdichter (22) wirkgekoppelt ist, wobei die Steuerungsvorrichtung Folgendes umfasst:
mindestens einen Prozessor; und
einen computerlesbaren Speicher, der mit Anweisungen codiert ist, die, wenn sie durch den mindestens einen Prozessor ausgeführt werden, die Steuerungsvorrichtung zu Folgendem veranlassen:
(a) Einleiten eines Kühlzyklus des Dampfzykluskühlsystems durch Erhöhen einer Drehzahl des Kompressors;
(b) Empfangen einer Angabe von erfasstem Druck des Kältemittels an dem Einlass des Verdichters von dem Drucksensor;
(c) Einleiten eines Abtauzyklus des Dampfzykluskühlsystems als Reaktion darauf, dass die empfangene Angabe des erfassten Drucks des Kältemittels weniger ist als ein Schwellenwertdruck;
(d) Beenden des Abtauzyklus bei Ablaufen einer Abtauzykluszeit, die auf einer Zeitdauer des Kühlzyklus beruht; und
(e) Wiederholen der Schritte (a) - (d).

9. Dampfzykluskühlsystem (10) nach Anspruch 8,
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, die Abtauzykluszeit auf Grundlage der Zeitdauer des Kühlzyklus einzustellen.

10. Dampfzykluskühlsystem (10) nach Anspruch 9,
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, die Abtauzykluszeit als Reaktion auf Bestimmen, dass die Zeitdauer des Kühlzyklus weniger ist als eine Schwellenwertzeitdauer, einzustellen.

11. Dampfzykluskühlsystem (10) nach Anspruch 9,
wobei der computerlesbare Speicher der Steuerungsvorrichtung mit Anweisungen codiert ist, die, wenn sie durch den mindestens einen Prozessor ausgeführt werden, die Steuerungsvorrichtung dazu veranlassen, die Abtauzykluszeit auf Grundlage einer Zeitdauer des Kühlzyklus durch Verringern der Abtauzykluszeit als Reaktion auf Bestimmen, dass die Zeitdauer des Kühlzyklus größer ist als eine Schwellenwertzeitdauer, einzustellen.

12. Dampfzykluskühlsystem (10) nach Anspruch 9,
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, die Abtauzykluszeit um eine Menge einzustellen, die proportional zu einer Differenz zwischen einer Schwellenwertzeitdauer und der Zeitdauer des Kühlzyklus ist.

13. Dampfzykluskühlsystem (10) nach Anspruch 9,
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, die Abtauzykluszeit von einer Basisabtauzykluszeit auf Grundlage einer Differenz zwischen der Zeitdauer des Kühlzyklus und einer Schwellenwertzeitdauer einzustellen.

14. Dampfzykluskühlsystem (10) nach Anspruch 8,
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, den Abtauzyklus durch Reduzieren einer Betriebsdrehzahl des Verdichters einzuleiten; und
wobei der computerlesbare Speicher der Steuerungsvorrichtung ferner mit Anweisungen codiert ist, die, wenn sie durch den mindestens einen Prozessor ausgeführt werden, die Steuerungsvorrichtung dazu veranlassen, den Kühlzyklus durch Erhöhen der Betriebsdrehzahl des Verdichters einzuleiten.

## Revendications

1. Procédé comprenant :
(a) le lancement d'un cycle de refroidissement d'un système de réfrigération à cycle de vapeur (10) d'un aéronef ;
(b) la détection d'une pression d'un fluide frigorigène à une entrée d'un compresseur du système de réfrigération à cycle de vapeur pendant le fonctionnement du cycle de refroidissement ;
(c) le lancement d'un cycle de dégivrage du système de réfrigération à cycle de vapeur (10) en réponse au fait que la pression détectée est inférieure à une pression seuil ;
(d) la fin du cycle de dégivrage à l'expiration d'une durée du cycle de dégivrage qui est fonction d'une durée du cycle de refroidissement ; et
(e) la répétition des étapes (a) à (d).

2. Procédé selon la revendication 1, comprenant en outre :
le réglage de la durée du cycle de dégivrage en fonction de la durée du cycle de refroidissement.

3. Procédé selon la revendication 2,
dans lequel le réglage de la durée du cycle de dégivrage en fonction de la durée du cycle de refroidissement comprend l'augmentation de la durée du cycle de dégivrage en réponse à la détermination du fait que la durée du cycle de refroidissement est inférieure à une durée seuil.

4. Procédé selon la revendication 2,
dans lequel le réglage de la durée du cycle de dégivrage en fonction de la durée du cycle de refroidissement comprend la diminution de la durée du cycle de dégivrage en réponse à la détermination du fait que la durée du cycle de refroidissement est supérieure à une durée seuil.

5. Procédé selon la revendication 2,
dans lequel le réglage de la durée du cycle de dégivrage en fonction de la durée du cycle de refroidissement comprend le réglage de la durée du cycle de refroidissement selon une quantité qui est proportionnelle à une différence entre une durée seuil et la durée du cycle de refroidissement.

6. Procédé selon la revendication 2,
dans lequel le réglage de la durée du cycle de dégivrage comprend le réglage de la durée du cycle de dégivrage à partir d'une durée du cycle de dégivrage de référence en fonction d'une différence entre la durée du cycle de refroidissement et une durée seuil.

7. Procédé selon la revendication 1,
dans lequel le lancement du cycle de dégivrage comprend la réduction d'une vitesse de fonctionnement du compresseur du système de réfrigération à cycle de vapeur ; et
dans lequel le lancement du cycle de refroidissement comprend l'augmentation de la vitesse de fonctionnement du compresseur.

8. Système de réfrigération à cycle de vapeur (10) d'un aéronef, le système de réfrigération à cycle de vapeur comprenant :
un évaporateur (20) configuré pour recevoir un fluide frigorigène et assurer le refroidissement d'un écoulement d'air par évaporation du fluide frigorigène ;
un compresseur (22) configuré pour comprimer le fluide frigorigène et produire l'écoulement du fluide frigorigène à travers le système de réfrigération à cycle de vapeur ;
un capteur de pression disposé de manière à détecter la pression du fluide frigorigène à l'entrée du compresseur (22) ; et
un dispositif de commande (12) couplé fonctionnellement au capteur de pression et au compresseur (22), le dispositif de commande comprenant :
au moins un processeur ; et
une mémoire lisible par ordinateur et codée avec des instructions qui, lorsqu'elles sont exécutées par l'au moins un processeur, amènent le dispositif de commande à :
(a) lancer un cycle de refroidissement du système de réfrigération à cycle de vapeur en augmentant une vitesse du compresseur ;
(b) recevoir une indication d'une pression détectée du fluide frigorigène à l'entrée du compresseur en provenance du capteur de pression ;
(c) lancer un cycle de dégivrage du système de réfrigération à cycle de vapeur en réponse à l'indication reçue que la pression détectée du fluide frigorigène est inférieure à une pression seuil ;
(d) mettre fin au cycle de dégivrage à l'expiration d'une durée du cycle de dégivrage qui est fonction d'une durée du cycle de refroidissement ; et
(e) répéter les étapes (a) à (d).

9. Système de réfrigération à cycle de vapeur (10) selon la revendication 8,
dans lequel la mémoire lisible par ordinateur du dispositif de commande est codée en outre avec des instructions qui, lorsqu'elles sont exécutées par l'au moins un processeur, amènent le dispositif de commande à régler la durée du cycle de dégivrage en fonction de la durée du cycle de refroidissement.

10. Système de réfrigération à cycle de vapeur (10) selon la revendication 9,
dans lequel la mémoire lisible par ordinateur du dispositif de commande est codée en outre avec des instructions qui, lorsqu'elles sont exécutées par l'au moins un processeur, amènent le dispositif de commande à régler la durée du cycle de dégivrage en fonction de la durée du cycle de refroidissement en augmentant la durée du cycle de dégivrage en réponse à la détermination du fait que la durée du cycle de refroidissement est inférieure à une durée seuil.

11. Système de réfrigération à cycle de vapeur (10) selon la revendication 9,
dans lequel la mémoire lisible par ordinateur du dispositif de commande est codée en outre avec des instructions qui, lorsqu'elles sont exécutées par l'au moins un processeur, amènent le dispositif de commande à régler la durée du cycle de dégivrage en fonction de la durée du cycle de refroidissement en diminuant la durée du cycle de dégivrage en réponse à la détermination du fait que la durée du cycle de refroidissement est supérieure à une durée seuil.

12. Système de réfrigération à cycle de vapeur (10) selon la revendication 9,
dans lequel la mémoire lisible par ordinateur du dispositif de commande est codée en outre avec des instructions qui, lorsqu'elles sont exécutées par l'au moins un processeur, amènent le dispositif de commande à régler la durée du cycle de dégivrage selon une quantité qui est proportionnelle à une différence entre une durée seuil et la durée du cycle de refroidissement.

13. Système de réfrigération à cycle de vapeur (10) selon la revendication 9,
dans lequel la mémoire lisible par ordinateur du dispositif de commande est codée en outre avec des instructions qui, lorsqu'elles sont exécutées par l'au moins un processeur, amènent le dispositif de commande à régler la durée du cycle de dégivrage à partir d'une durée du cycle de dégivrage de référence en fonction d'une différence entre la durée du cycle de refroidissement et une durée seuil.

14. Système de réfrigération à cycle de vapeur (10) selon la revendication 8,
dans lequel la mémoire lisible par ordinateur du dispositif de commande est codée en outre avec des instructions qui, lorsqu'elles sont exécutées par l'au moins un processeur, amènent le dispositif de commande à lancer le cycle de dégivrage en réduisant une vitesse de fonctionnement du compresseur ; et
dans lequel la mémoire lisible par ordinateur du dispositif de commande est codée en outre avec des instructions qui, lorsqu'elles sont exécutées par l'au moins un processeur, amènent le dispositif de commande à lancer le cycle de refroidissement en augmentant la vitesse de fonctionnement du compresseur.
